# FASCICULE DE BREVET EUROPEEN

(11) **EP 4 256 194 B1**
(45) Date de publication et mention de la délivrance du brevet: **12.03.2025**
(21) Numéro de dépôt: 21840072.9
(22) Date de dépôt: 29.11.2021
(51) Int. Cl.: F02K 3/06, F01D 5/28, F01D 21/04, F01D 5/14, B29B 11/16, D03D 25/00

(54) **HYBRIDATION DES FIBRES DU RENFORT FIBREUX D'UNE AUBE DE SOUFFLANTE**
HYBRIDISIERUNG DER FASERVERSTÄRKUNGSFASERN EINES LÜFTERBLATTS
HYBRIDIZATION OF THE FIBER REINFORCEMENT FIBERS OF A FAN BLADE

(30) Priorité: 03.12.2020 FR 2012586
(43) Date de publication de la demande: 11.10.2023
(73) Titulaire: SAFRAN AIRCRAFT ENGINES, 75015 Paris (FR)
(72) Inventeur: RAKOTOARISOA, Carole Onja, 77550 MOISSY-CRAMAYEL (FR); FIXY, Teddy, 77550 MOISSY-CRAMAYEL (FR); GONDRE, Guillaume Pascal Jean-Charles, 77550 MOISSY-CRAMAYEL (FR); SCHNEIDER-DIE-GROSS, Julien Paul, 77550 MOISSY-CRAMAYEL (FR)
(74) Mandataire: Regimbeau
(86) Numéro de dépôt international: PCT/FR2021/052119
(87) Numéro de publication internationale: WO 2022/117938

(56) Documents cités:
- EP-A1- 3 581 764
- CN-A- 102 817 794
- FR-A1- 2 998 827
- FR-A1- 3 087 701
- US-A1- 2019 323 357

## Description

### DOMAINE DE L'INVENTION

L'invention concerne de manière générale le domaine des turbomachines, et plus particulièrement celui des aubes de soufflantes de ces turbomachines et leur procédé de fabrication.

L'invention s'applique plus particulièrement aux aubes de soufflante en matériau composite et leur interaction avec l'entrée de la veine primaire.

### ETAT DE LA TECHNIQUE

Les aubes de turbomachine, et notamment les aubes de soufflante, subissent d'importantes contraintes mécaniques et thermiques et doivent satisfaire à des conditions strictes de poids et d'encombrement. Il a donc été proposé d'utiliser des aubes dans un matériau composite comportant un renfort fibreux densifié par une matrice polymère, qui sont plus légères par rapport à des aubes métalliques à caractéristiques propulsives équivalentes et qui ont une tenue à la chaleur satisfaisante.

Lors de la certification et de la vie d'un moteur, les aubes de soufflante sont soumises à des ingestions d'oiseaux et de grêlons. Toutefois, selon le type de l'objet impactant l'aube (et notamment sa taille, sa masse) et selon le type de soufflante (vitesse de rotation et nombre d'aubes), les zones privilégiées d'initiation et de propagation des endommagements sont différentes. Le comportement mécanique des aubes de soufflante est donc optimisé pendant la phase de conception des aubes pour respecter les règles de certification.

Par ailleurs, les conceptions actuelles tendent à réduire l'épaisseur de la structure en matériau composite des aubes dans les zones du bord d'attaque, du bord de fuite voire sur l'ensemble de la structure afin d'améliorer les performances aérodynamiques. A iso-matériau et iso-loi d'empilage, la capacité de l'aube à résister à un impact se trouve par conséquent réduite.

Afin d'améliorer la résistance des aubes à l'impact d'objets notamment à l'ingestion d'oiseaux, il a été proposé d'hybrider les fibres du matériau composite. Par exemple, il a été proposé remplacer une partie des fibres de carbone du renfort fibreux formant le bord de fuite de l'aube en matériau composite par des fibres de verre. Cette hybridation a permis d'améliorer le comportement des aubes à l'impact. Toutefois, compte-tenu de l'épaisseur variable de l'aube, la gestion des transitions de propriété entre les fibres est complexe et crée des zones de fragilité à l'interface des fibres carbone/verre. De telles aubes hybrides sont connues du document FR3087701.

### EXPOSE DE L'INVENTION

Un objectif de l'invention est donc de remédier aux inconvénients précités, en proposant une aube de soufflante pour une turbomachine dont le comportement à l'ingestion est amélioré sans créer de zone fragilité.

Un autre objectif de l'invention est d'améliorer l'hybridation d'une aube réalisée dans un matériau composite comprenant un renfort fibreux densifié par une matrice, et en particulier de lisser les gradients de changement de propriété de manière simple et efficace, tout en améliorant le comportement de l'aube en cas d'ingestion.

Pour cela, selon un premier aspect, l'invention propose une aube de soufflante d'une turbomachine comprenant une structure en matériau composite comprenant un renfort fibreux obtenu par tissage tridimensionnel de torons et une matrice dans laquelle est noyé le renfort fibreux. Le renfort fibreux comprend une première portion et une deuxième portion distinctes l'une de l'autre, les torons du renfort fibreux comprenant des premiers torons réalisés dans un premier matériau présentant une première raideur et des deuxièmes torons réalisés dans un deuxième matériau différent du premier matériau et présentant une deuxième raideur inférieure à la première raideur. La première portion comprend uniquement des premiers torons, la deuxième portion comprenant uniquement des deuxièmes torons. De plus, le renfort fibreux comprend en outre une troisième portion positionnée entre la première portion et la deuxième portion, la troisième portion comprenant à la fois des premiers torons, des deuxièmes torons et des troisièmes torons, les troisièmes torons présentant une troisième raideur inférieure à la première raideur et supérieure à la deuxième raideur. Par ailleurs, au sein de la troisième portion, une densité volumique des premiers torons diminue progressivement de la première portion en direction de la deuxième portion, une densité volumique des deuxièmes torons diminue progressivement de la deuxième portion en direction de la première portion.

Certaines caractéristiques préférées mais non limitatives de l'aube de soufflante selon le premier aspect sont les suivantes, prises individuellement ou en combinaison :
- la troisième portion comprend une première partie en contact avec la première portion, une deuxième partie en contact avec la deuxième portion et une partie centrale s'étendant entre la première partie et la deuxième partie, la première partie étant dépourvue de deuxièmes torons et la deuxième partie étant dépourvue de premiers torons ;
- la partie centrale comprend uniquement des troisièmes torons.
- l'aube de soufflante comprend une première zone dans laquelle la deuxième portion comprend une échasse de l'aube et une paroi extrados jusqu'à une hauteur comprise 0 % de 30 % d'une hauteur de la pale et sur une portion de corde s'étendant depuis une limite amont s'étendant à une distance d'un bord d'attaque de l'aube comprise entre 2 % et 10% de la longueur de corde, de préférence de l'ordre de 7 %, et une limite aval s'étendant à une distance d'un bord de fuite de l'aube comprise entre 10 % et 60% de la longueur de corde, de préférence de l'ordre de 55 % ; et la troisième portion entoure la deuxième portion en s'étendant de part et d'autre de la deuxième portion sur une portion de longueur de corde de l'ordre à 5 % de la longueur de corde ;
- l'aube de soufflante comprend la deuxième portion comprend un bord d'attaque et une paroi intrados de l'aube et s'étend sur une hauteur comprise entre 40 % et 65 % d'une hauteur de l'aube et une portion de corde comprise entre 20 % et 40 % de la longueur de corde, par exemple de l'ordre de 40 % ; et la troisième portion s'étend du bord d'attaque en direction de la paroi intrados en entourant la deuxième portion sur une portion de longueur égale à 50 % de la longueur de corde ;
- la deuxième portion et la troisième portion s'étendent chacune sur une épaisseur égale à un tiers d'une épaisseur du renfort fibreux ;
- l'aube de soufflante comprend une troisième zone dans laquelle : la deuxième portion comprend un bord de fuite de l'aube, sur tout ou partie d'une hauteur de la pale et sur une longueur égale à au plus 10 % d'une longueur de corde ; la troisième portion jouxte la deuxième portion et s'étend le long de la deuxième portion, sur une longueur égale à au plus 10 % de la longueur de corde ; et la deuxième portion et la troisième portion s'étendent chacune sur toute une épaisseur du renfort fibreux ;
- les premiers torons, les deuxièmes torons et les troisièmes torons comprennent des torons de chaine distribués de sorte à former des colonnes de chaîne ;
- l'aube de soufflante comprend une quatrième zone dans laquelle : la deuxième portion comprend un sommet de l'aube et un bord de fuite, sur une hauteur égale à au plus 10 % de la hauteur de l'aube et une longueur comprise entre 40 % et 100 % de la longueur de corde ; la troisième portion s'étend depuis le sommet de l'aube sur toute la longueur de la deuxième portion et sur une hauteur égale à au plus 5 % de la hauteur de l'aube ; et la deuxième portion et la troisième portion s'étendent chacune sur toute une épaisseur du renfort fibreux.
- dans laquelle les premiers, deuxièmes et troisièmes torons comprennent des torons de trame distribués de sorte à former des lignes de trame ;
- le renfort fibreux comprend uniquement une première portion, une ou plusieurs deuxième(s) portion(s) et une ou plusieurs troisième(s) portion(s) ;
- les premiers torons présentent un module d'élasticité compris entre 240 GPa et 350 GPa, de préférence supérieur ou égal à 250 GPa, les premiers torons pouvant comprendre des fibres de carbone ;
- les deuxièmes torons présentent un module d'élasticité compris entre 150 GPa et 190 GPa, les deuxièmes torons pouvant comprendre des fibres de verre ou des fibres de basalte ; et/ou
- les troisièmes torons présentent un module d'élasticité compris entre 180 GPa et 250 GPa, les troisièmes torons pouvant comprendre des fibres d'aramide.

Selon un deuxième aspect, l'invention concerne une soufflante pour une turbomachine comprenant une pluralité d'aubes de soufflante conformes au premier aspect.

Selon un troisième aspect, l'invention propose une turbomachine comprenant une telle soufflante et un aéronef comprenant cette turbomachine.

Selon un quatrième aspect, l'invention propose un renfort fibreux pour une aube de soufflante conforme au premier aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue schématique représentant un exemple de renfort fibreux pour une aube de soufflante conforme à un mode de réalisation, sur laquelle ont été représentées plusieurs zones d'hybridation potentielle des fibres du renfort fibreux conformément à un mode de réalisation de l'invention, dont une zone (18) en transparence ;
La figure 2 est une vue en coupe du renfort fibreux suivant le plan A-A de la figure 1 ;
La figure 3 est une vue en coupe du renfort fibreux suivant le plan B-B de la figure 1 ;
La figure 4 est une vue schématique illustrant de manière simplifiée un exemple d'hybridation des premiers, deuxièmes et troisièmes torons au sein d'une troisième portion d'un renfort fibreux conforme à l'invention ; et

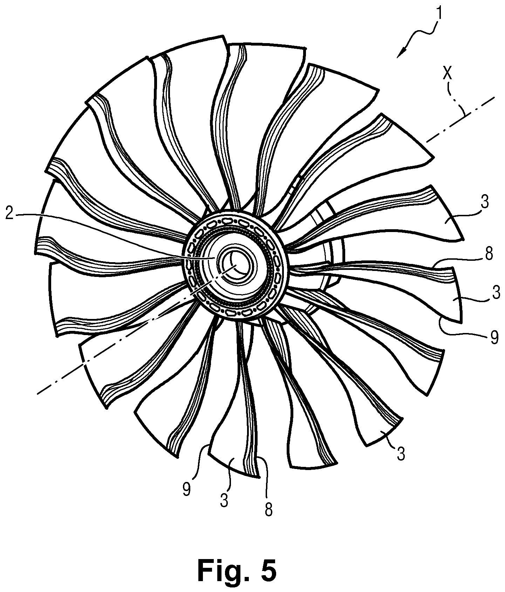

La figure 5 est une vue en perspective d'un exemple de réalisation d'une soufflante comprenant des aubes conforme à l'invention.

Sur l'ensemble des figures, les éléments similaires portent des références identiques.

### DESCRIPTION DETAILLEE DE L'INVENTION

Dans la présente demande, l'amont et l'aval sont définis par rapport au sens d'écoulement normal du gaz dans la soufflante 1 à travers la turbomachine. Par ailleurs, on appelle axe de révolution de la soufflante 1, l'axe X de symétrie radiale de la soufflante 1. La direction axiale correspond à la direction de l'axe X de la soufflante 1, et une direction radiale est une direction perpendiculaire à cet axe et passant par lui.

Une soufflante 1 de turbomachine comprend un disque 2 de soufflante 1 portant une pluralité d'aubes 3 de soufflante 1 associées à des plateformes inter-aubes.

Chaque aube 3 comprend une structure en matériau composite comportant un renfort fibreux 4 obtenu par tissage tridimensionnel et une matrice dans laquelle est noyé le renfort fibreux 4.

Cette structure en matériau composite comprend un pied 5, une échasse 6 et une pale 7 à profil aérodynamique. Le pied 5 est destiné à permettre la fixation de l'aube 3 au disque 2 de soufflante et s'étend à cet effet entre un fond d'une empreinte formée dans le disque 2 et la sortie des portées de l'empreinte. La pale 7 à profil aérodynamique quant à elle est propre à être placée dans un flux d'air, lorsque la turbomachine est en fonctionnement, afin de générer une portance. Enfin, l'échasse 6 correspond à la zone 20e la pale 7 qui s'étend entre le pied 5 et la pale 7, c'est-à-dire entre la sortie des portées et les plateformes inter-aubes 3. L'échasse 6 n'est donc pas configurée pour s'étendre dans le flux d'air.

L'aube 3 comprend également, de manière connue en soi, un bord d'attaque 8, un bord de fuite 9, une paroi intrados I et une paroi extrados E. Le bord d'attaque 8 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados I et en un écoulement extrados E. Le bord de fuite 9 quant à lui correspond à la partie postérieure du profil aérodynamique, où se rejoignent les écoulements intrados I et extrados E.

Enfin, la structure est formée d'une pluralité de sections d'aube 3 empilées depuis le pied 5 selon un axe d'empilement Z s'étendant radialement par rapport à l'axe de révolution X de la soufflante 1.

Dans ce qui suit, par « hauteur » on désignera une distance suivant l'axe d'empilement Z. Ainsi, la pale 7 présente une hauteur H correspondant à la distance suivant l'axe d'empilement Z entre sa limite inférieure 10, à l'intersection avec l'échasse 6, et son sommet 11. La hauteur H de la pale 7 est mesurée à l'intersection entre le bord d'attaque 8 et la limite inférieure 10 de la pale 7.

Le renfort fibreux 4 peut être formé à partir d'une préforme fibreuse en une seule pièce obtenue par tissage tridimensionnel ou multicouche avec épaisseur évolutive. Il comprend des torons de chaîne et de trame qui peuvent notamment comprendre des fibres en carbone, en verre, en basalte, et/ou en aramide. La matrice quant à elle est typiquement une matrice polymère, par exemple époxyde, bismaléimide ou polyimide. L'aube 3 est alors formée par moulage au moyen d'un procédé d'injection sous vide de résine du type RTM (pour « Resin Transfer Moulding), ou encore VARRTM (pour Vacuum Resin Transfer Molding).

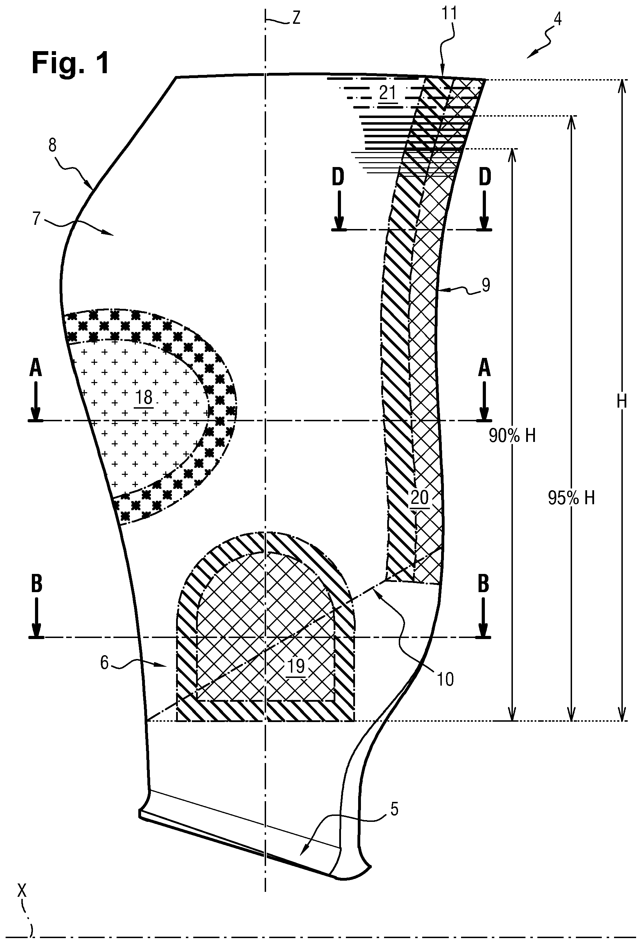

La figure 1 représente schématiquement une aube 3 dont le renfort fibreux 4 a été mis en forme à partir d'une préforme fibreuse tissée tridimensionnelle, avant injection de résine ou densification par une matrice et usinage éventuel, afin d'obtenir une aube 3 de soufflante 1 en matériau composite conforme à l'invention. Par tissage tridimensionnel, on comprendra que les torons de chaîne suivent des trajets sinueux afin de lier entre eux des torons de trame appartenant à des couches de torons de trame différentes exception faite de déliaisons, étant noté qu'un tissage tridimensionnel, notamment à armure interlock, peut inclure des tissages 2D en surface. Différentes armures de tissage tridimensionnel peuvent être utilisées, telles que des armures interlock, multi-satin ou multi-voile, par exemple, comme décrit notamment dans le document WO 2006/136755.

Les torons du renfort fibreux 4 comprennent :
- des premiers torons 12 réalisés dans un premier matériau présentant une première raideur ;
- des deuxièmes torons 13 réalisés dans un deuxième matériau différent du premier matériau et présentant une deuxième raideur inférieure à la première raideur ; et
- des troisièmes torons 14 réalisés dans un troisième matériau différent du premier et du deuxième matériau. Le troisième matériau présente en outre une troisième raideur qui est supérieure à la deuxième raideur et inférieure à la première raideur.

A titre d'exemple non limitatif, les premiers torons 12 peuvent être réalisés dans un matériau ayant une raideur E (module d'élasticité en traction, ou première raideur) entre 240 GPa et 350 GPa, les deuxièmes torons 13 dans un matériau ayant une raideur E (ou deuxième raideur) entre 150 GPa et 190 GPa et les troisièmes torons 14 dans un matériau ayant une raideur E (ou troisième raideur) entre 180 GPa et 250 GPa. Un facteur entre les valeurs des première et deuxième raideurs E peut par exemple être compris entre 1,5 et 2. Un facteur entre les valeurs des première et troisième raideur peut par exemple être compris entre 1,5 à 1,2.

A titre d'exemple, les premiers torons 12 peuvent être réalisés en fibres de carbone ayant une première raideur E supérieure ou égale à 250 GPa, les deuxièmes torons 13 en fibres de verre ayant une deuxième raideur E de l'ordre de 165 GPa et les troisièmes torons 14 en fibres d'aramide ayant une troisième raideur E de l'ordre 200 GPa.

L'allongement à la rupture des premiers torons peut être compris entre environ 1,5 et environ 2,5, par exemple de l'ordre de 2. L'allongement à la rupture des deuxièmes torons peut être compris entre environ 4 et environ 6, par exemple de l'ordre de 5. L'allongement à la rupture des troisièmes torons peut être compris entre environ 2,5 et environ 3. De manière générale, il est considéré dans une zone à transitions de torons un maximum 30% de gradient de perte d'allongement à rupture sur 15 à 20 millimètres dans une direction et/ou un maximum de 30% de gradient de perte de raideur sur 15 à 20 millimètres dans cette direction ou une autre direction.

Les premiers torons 12, les deuxièmes torons 14 et les troisièmes torons 14 sont répartis dans la préforme fibreuse de sorte à former une première portion 15, une deuxième portion 16 et une troisième portion 17 telles que :
- la première portion 15 comprend uniquement des premiers torons 12 ;
- la deuxième portion 16 est séparée et distincte de la première portion 15 et comprend uniquement des deuxièmes torons 13 ; et
- la troisième portion 17 est positionnée entre la première portion 15 et la deuxième portion 16 et comprend des troisièmes torons 14.

De plus, afin de lisser les gradients des propriétés entre la première et la deuxième portion 15, 16, la troisième portion 17 comprend en outre des premiers torons 12 et des deuxièmes torons 13 en plus des troisièmes torons 14, sachant que, au sein de la troisième portion 17, une densité volumique des premiers torons 12 diminue progressivement de la première portion 15 en direction de la deuxième portion 16 et une densité volumique des deuxièmes torons 13 diminue progressivement de la deuxième portion 16 en direction de la première portion 15.

Dans une forme de réalisation, le renfort fibreux 4 comprend uniquement une première portion 15, un ou plusieurs deuxièmes 16 et une ou plusieurs troisièmes portions 17.

Optionnellement, le renfort fibreux 4 peut comprendre plusieurs deuxièmes portions, distinctes les unes des autres et séparées deux à deux de la première portion 15 par une troisième portion 17 associée.

Plus précisément, les premiers torons 12 ont un module d'élasticité élevé, par exemple supérieur à 250 GPa, et ont pour fonction de permettre de respecter les critères de conception de l'aube 3, et notamment le statut fréquentiel de l'aube 3. La première portion 15 forme donc la majeure partie du renfort fibreux 4, et en particulier la portion du renfort 4 qui comprend globalement les parties basses et épaisses de l'aube 3 (à savoir le pied 5 de l'aube 3, l'échasse 6 et une partie inférieure de la pale 7) et une majeure partie de la paroi extrados E de l'aube 3 pour que les fréquences propres de l'aube 3 soient élevées. Cela permet ainsi de limiter ou du moins d'éloigner les croisements fréquentiels entre les premiers modes propres de l'aube 3, énergétiques, et les harmoniques moteur.

Les deuxièmes torons 13 quant à eux, dont la raideur (module d'élasticité E) est moins élevée que celle des premiers torons 12, ont pour fonction de limiter l'initiation et la propagation des endommagements de l'aube 3 lors d'ingestion d'objets, et notamment d'oiseaux. La ou les deuxièmes portions 16 forment donc la ou les portion(s) du renfort 4 qui sont susceptibles d'être fortement sollicitée(s) en cas d'ingestion d'objet. Typiquement, et comme nous le détaillerons dans ce qui suit, dans le cas d'une aube 3 susceptible de recevoir un impact du type oiseau lourd (« large bird » en anglais), la deuxième portion 16 s'étend sur une partie du bord d'attaque 8 (en partie centrale de l'aube 3, à distance de sa limite inférieure 10 et de son sommet 11 et côté intrados I) (zone 18) et/ou au niveau de l'échasse 6 côté extrados E (zone 19). Par ailleurs, lorsque l'aube 3 est susceptible de recevoir un impact du type oiseau moyen (« medium bird » en anglais), la deuxième portion 16 s'étend sur tout ou partie du bord de fuite 9 (zone 20) et/ou en sommet 11 d'aube 3 (zone 21), sur toute l'épaisseur de l'aube 3. Bien entendu, la deuxième portion 16 peut s'étendre tout ou partie des zones 18-21.

La ou les troisième(s) portion(s) 17 s'étendent entre la première portion 15 et la deuxième portion 16 et sont configurées pour servir d'interface entre la première portion 15 et la deuxième portion 16 afin de limiter les fragilités dues à des discontinuités de matériaux. Lorsque les torons du renfort fibreux 4 comprennent uniquement des premiers torons 12 dans la première portion 15 de l'aube 3 et uniquement des deuxièmes torons 13 dans la deuxième portion 16 de l'aube 3, et que la première portion 15 et la deuxième portion 16 sont bout à bout dans le renfort 4, l'aube 3 ainsi obtenue permet effectivement d'éviter les endommagements de l'aube 3 dans les zones 18-21 comprenant les deuxièmes torons 13. Toutefois, le Demandeur s'est aperçu du fait qu'en l'absence de troisième portion 17, c'est-à-dire en introduisant de manière abrupte des deuxièmes torons 13 et en supprimant simultanément les premiers torons 12 à l'interface entre la première portion 15 et la deuxième portion 16 du renfort fibreux 4, l'aube 3 obtenue risquait d'être fortement endommagée au niveau de cette interface en cas d'impact, car l'interface entre les deux portions 11, 12 du renfort 4 est fragilisée par la discontinuité forte des propriétés matériaux. Le simple mélange des premiers et deuxièmes torons 12, 13 ne permet pas non plus de lisser suffisamment les gradients de propriétés, compte-tenu de l'écart important entre leurs raideurs respectives. Le lissage est ainsi réalisé grâce à l'introduction, dans la troisième portion 17, des troisièmes torons 14 et à la diminution progressive de la densité volumique des premiers et deuxièmes torons 12, 13 dans ladite troisième portion 17.

La troisième portion 17 permet ainsi de faire une transition lisse et régulière entre les propriétés matériaux de la première portion 15 et les propriétés matériaux de la deuxième portion 16. Pour cela, la densité volumique des deuxièmes torons 13 est progressivement augmentée au sein de la troisième portion 17, de la première portion 15 vers la deuxième portion 16. Ainsi, à l'interface entre la première portion 15 et la troisième portion 17, la densité volumique des deuxièmes torons 13 est nulle, la densité volumique des troisièmes torons 14 est faible tandis que la densité volumique des premiers torons 12 est très forte. En revanche, à l'interface entre la troisième portion 17 et la deuxième portion 16, la densité volumique des deuxièmes torons 13 est très forte tandis que la densité volumique des premiers torons 12 est nulle et celle des troisièmes torons 14 est faible.

Afin d'optimiser la résistance de l'aube 3 aux impacts d'objets, excepté dans la zone 21 comprenant le sommet 11 d'aube 3, les deuxièmes torons 13 sont des torons de chaîne du renfort 4 (c'est-à-dire des torons s'étendant suivant l'axe d'empilement Z des sections d'aube 3). En effet, dans les zones 18-20, les endommagements (voire la rupture de l'aube 3) sont initiés selon le sens corde, la fissure étant dans le sens radial, de sorte que la tenue du renfort doit être renforcée dans le sens chaîne.

En revanche, dans la zone 21 comprenant le sommet 11 d'aube 3, les deuxièmes torons 13 comprennent des torons de trame.

Dans la zone 18, la deuxième portion 16 s'étend au niveau du bord d'attaque 8 sur une portion de longueur de corde Comprise entre 10 % et 50 % de la corde C totale de l'aube 3. De préférence, la portion de longueur de corde C est comprise entre 20 % et 40 % de la corde C totale de l'aube 3, par exemple de l'ordre de 40 %. Par corde C, on comprendra ici, pour une section donnée de l'aube 3 (et donc pour un point donné de l'axe d'empilement Z), le segment de droite sensiblement axial qui connecte le bord d'attaque 8 au bord de fuite 9 de l'aube 3.

Comme indiqué précédemment, la deuxième portion 16 s'étend en partie centrale de l'aube 3, sur une partie seulement de la hauteur H de la pale 7. Dans une forme de réalisation, le bord inférieur de la deuxième portion 16 est à une distance (mesurée à partir de la limite inférieure 10 de l'aube 3) égale à au moins 10 % de la hauteur H de la pale 7, de préférence à une distance égale à environ 40 % de cette hauteur H. Par ailleurs, le bord supérieur de la deuxième portion 16 est à une distance (mesurée à partir de la limite inférieure 10 de l'aube 3) égale à au plus 70 % de la hauteur H de la pale 7, de préférence à une distance égale à environ 65 % de cette hauteur H.

Dans un exemple de réalisation, afin d'optimiser la résistance de l'aube 3 aux impacts d'oiseaux lourds, le bord inférieur de la deuxième portion 16 est à une distance égale à 40 % de la hauteur H de la pale 7 et son bord supérieur à une distance égale à 65 % de ladite hauteur H (ces distances étant mesurées depuis la limite inférieure 10 de l'aube 3). Cet exemple de réalisation permet à la fois d'améliorer le comportement de l'aube 3 en cas d'ingestion d'oiseaux lourds mais également de faciliter sa fabrication et de limiter le dévrillage supplémentaire induit par le fait que les deuxièmes torons 13 présentent un plus faible module d'élasticité que les premiers torons 12.

La deuxième portion 16 est par ailleurs positionnée au niveau de la paroi intrados I et ne s'étend pas jusqu'à la paroi extrados E. Dans la zone 18, la deuxième portion 16 ne s'étend donc pas sur toute l'épaisseur du renfort fibreux 4 mais uniquement en peau de celui-ci.

Dans la zone 18, la troisième portion 17 est alors positionnée de sorte à former une interface en tout point entre la deuxième portion 16 et la première portion 15. La deuxième portion 16 est donc englobée dans la troisième portion 17, excepté au niveau de la paroi intrados I où la deuxième portion 16 forme ladite paroi intrados I. Ainsi, la troisième portion 17 s'étend :
- entre le bord inférieur de la deuxième portion 16 et l'échasse 6 sur une portion de hauteur pouvant être comprise entre 5% et 10% de la hauteur H de la pale 7 ;
- entre le bord supérieur de la deuxième portion 16 et le sommet 11 sur une portion de hauteur pouvant être comprise entre 5% et 10% de la hauteur H de la pale 7 ;
- de part et d'autre de la deuxième portion 16 en direction du bord d'attaque 8 et du bord de fuite 9 sur une portion de longueur de corde C de l'ordre de 5% de la longueur de corde C ; et
- entre la deuxième portion 16 et la paroi extrados E sur une épaisseur (dimension suivant un axe perpendiculaire à l'axe d'empilement et sensiblement normal à la paroi intrados I au point de mesure) égale à un tiers de l'épaisseur totale du renfort fibreux 4.

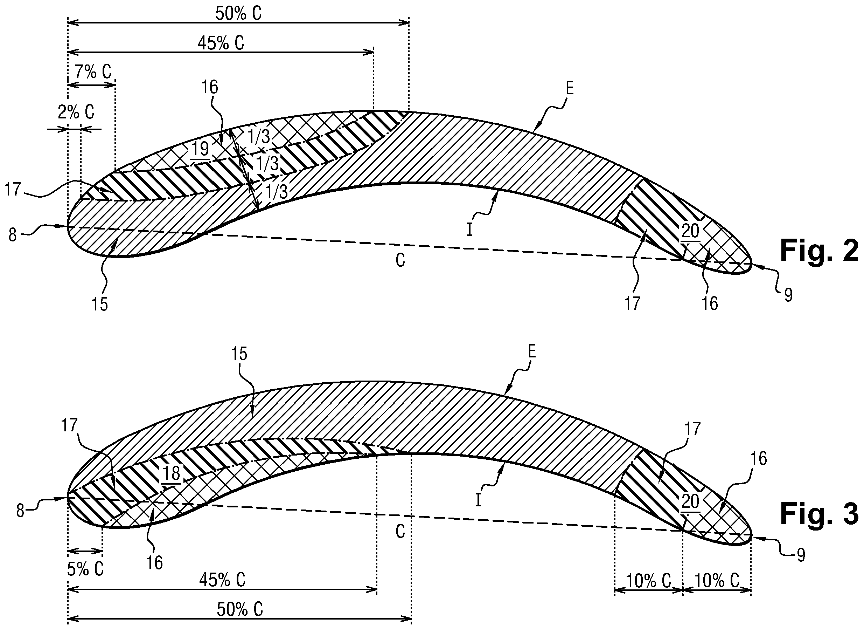

Comme cela est visible sur la figure 3, dans la zone 18, le bord d'attaque 8 comprend donc successivement, de la paroi intrados I vers la paroi extrados E, la deuxième portion 16, la troisième portion 17 et la première portion 15, chacune de ces portions 15, 16, 17 présentant (dans un plan normal à l'axe d'empilement Z coupant la troisième portion 17) une épaisseur sensiblement égale à un tiers de l'épaisseur totale du renfort fibreux 4 (dans ce plan).

Dans la zone 19, la deuxième portion 16 s'étend à distance du bord d'attaque 8 et du bord de fuite 9, sur une portion de longueur de corde Comprise entre 10 % et 50 % de la corde C totale de l'aube 3. De préférence, la portion de longueur de corde C est comprise entre 30 % et 40 % de la corde C totale de l'aube 3, par exemple de l'ordre de 38 %. Par ailleurs, la limite amont (côté bord d'attaque 8) de la deuxième portion 16 s'étend à une distance depuis le bord d'attaque 8 comprise entre 2 % et 10% de la longueur de corde C, de préférence de l'ordre de 7 %, et la limite aval (côté bord de fuite 9) de la deuxième portion 16 s'étend à une distance depuis le bord de fuite 9 comprise entre 10 % et 60% de la longueur de corde C, de préférence de l'ordre de 55 %.

Comme indiqué précédemment, la deuxième portion 16 s'étend en partie inférieure de l'aube 3, sur une partie seulement de la hauteur H de la pale 7. Dans une forme de réalisation, la deuxième portion 16 s'étend de l'échasse 6 jusqu'à une hauteur inférieure ou égale à 30 % de la hauteur H de la pale 7.

La deuxième portion 16 est en outre positionnée au niveau de la paroi extrados Et ne s'étend pas jusqu'à la paroi intrados I. L'épaisseur de la deuxième portion 16 est comprise entre 10 % et 40 % de l'épaisseur du renfort fibreux 4, de préférence environ un tiers de l'épaisseur totale. Dans la zone 19, la deuxième portion 16 ne s'étend donc pas sur toute l'épaisseur du renfort fibreux 4 mais uniquement en peau de celui-ci.

Dans la zone 19, la troisième portion 17 est alors positionnée de sorte à former une interface en tout point entre la deuxième portion 16 et la première portion 15. La deuxième portion 16 est donc englobée dans la troisième portion 17, excepté au niveau de la paroi extrados E où la deuxième portion 16 est en peau. Ainsi, la troisième portion 17 s'étend :
- entre le bord inférieur de la deuxième portion 16 et le pied 5 sur une portion de hauteur pouvant être comprise entre 5% et 10% de la hauteur H de la pale 7 ;
- entre le bord supérieur de la deuxième portion 16 et le sommet 11 sur une portion de hauteur pouvant être comprise entre 5% et 10% de la hauteur H de la pale 7 ;
- de part et d'autre de la deuxième portion 16 en direction du bord d'attaque 8 et du bord de fuite 9 sur une portion de longueur de corde C de l'ordre de 5% de la longueur de corde C ; et
- entre la deuxième portion 16 et la paroi intrados I, sur une épaisseur (dans un plan normal à l'axe d'empilement Z coupant la troisième portion 17) égale à un tiers de l'épaisseur totale du renfort fibreux 4 (dans ce plan).

Dans la zone 20, la deuxième portion 16 s'étend sur une portion de longueur de corde C de l'ordre de 10 % de la longueur de corde C totale, en tout point de l'axe d'empilement Z de l'aube 3.

De préférence, la deuxième portion 16 s'étend depuis le sommet 11 de l'aube 3. Idéalement, afin d'optimiser la résistance de l'aube 3 aux impacts d'oiseaux, la deuxième portion 16 s'étend sensiblement sur toute la hauteur de l'aube 3, c'est-à-dire du sommet 11 jusqu'au pied 5 de l'aube 3 (ou en variante jusqu'à l'échasse 6).

Dans une variante de réalisation, afin de simplifier la certification de la zone pied 5/échasse 6 de l'aube 3 et d'améliorer le comportement du bord de fuite 9 vis-à-vis de l'ingestion de l'ensemble des types d'objets (oiseaux lourds, oiseaux de taille moyenne (medium birds en anglais) et oiseaux légers), la deuxième portion 16 peut ne s'étendre que sur une partie de la hauteur de la pale 7 jusqu'à un bord inférieur s'étendant à une distance comprise entre 0 % (cas où la deuxième portion 16 s'étend sur toute la pale 7) et 65 % de la hauteur H de la pale 7. La hauteur de la deuxième portion 16 dans la zone 20 est donc comprise entre 35 % et 100 % de la hauteur G de la pale 7.

Dans une autre variante de réalisation, la distance entre la limite inférieure 10 de l'aube 3 et le bord inférieur de la deuxième portion 16 (suivant l'axe d'empilement Z de l'aube 3) est supérieure à 65 % de la hauteur H de la pale 7. La hauteur de la deuxième portion 16 est donc inférieure à 35 % de la hauteur h de la pale 7. Cette deuxième variante de réalisation permet de faciliter la fabrication et de limiter le dévrillage supplémentaire induit par le fait que la raideur des deuxièmes torons 13 est inférieure à celle les premiers torons 12. Toutefois, l'amélioration le comportement du bord de fuite 9 vis-à-vis de l'ingestion des d'objets du type oiseaux de taille moyenne (medium birds) et oiseaux légers est moindre en comparaison avec la première forme de réalisation.

Il en découle que le dimensionnement de l'aube 3 permet de déterminer la distance à partir de laquelle introduire des deuxièmes torons 13 dans le renfort fibreux 4, afin d'allier raideur nécessaire pour le statut fréquentiel (premiers torons 12) et allongement à rupture (deuxièmes torons 13) pour la tenue à l'ingestion.

Dans la zone 20, la deuxième portion 16 s'étend sur toute l'épaisseur du renfort fibreux 4, de la paroi intrados I à la paroi extrados E.

Dans cette zone 20, la troisième portion 17 est alors positionnée de sorte à former une interface en tout point entre la deuxième portion 16 et la première portion 15. La troisième portion 17 s'étend donc depuis la deuxième portion 16 et le sommet 11 de l'aube 3, sur toute l'épaisseur du renfort fibreux 4, et entre le bord inférieur de la deuxième portion 16 et le pied 5. Ainsi, la troisième portion 17 s'étend :
- entre le bord inférieur de la deuxième portion 16 et le pied 5 sur une portion de hauteur pouvant être comprise entre 5 % et 10 % de la hauteur H de la pale 7 ;
- à partir de la deuxième portion 16 en direction du bord d'attaque 8, sur une portion de longueur de corde C de l'ordre de 10 % de la longueur de corde C ; et
- sur toute l'épaisseur du renfort fibreux 4.

Dans la zone 21, la deuxième portion 16 s'étend depuis le bord de fuite 9 et comprend le sommet 11 sur toute l'épaisseur du renfort 4, sur une portion de longueur de corde Comprise entre 40 % et 100 % de la corde C totale de l'aube 3. De préférence, la portion de longueur de corde C est comprise entre 40 % et 80 % de la corde C totale de l'aube 3.

De plus, la deuxième portion 16 s'étend sur 5 % à 10 % de la hauteur H de la pale 7, de préférence de l'ordre de 5 %.

Dans la zone 19, la troisième portion 17 est alors positionnée de sorte à former une interface en tout point entre la deuxième portion 16 et la première portion 15. La deuxième portion 16 est donc bordée par la troisième portion 17. Ainsi, la troisième portion 17 s'étend :
- entre le bord inférieur de la deuxième portion 16 et le pied 5 sur une portion de hauteur pouvant être comprise entre 5% et 10% de la hauteur H de la pale 7, de préférence de l'ordre de 5 % ;
- à partir de la deuxième portion 16 en direction du bord d'attaque 8, sur une portion de longueur de corde C de l'ordre de 5% de la longueur de corde C ; et
- sur toute l'épaisseur du renfort fibreux 4.

La géométrie des deuxièmes portons 16 dans les zones 18-21 peut être quelconque. En effet, comme défini ci-dessus, les zones 18-21 permettent de modifier les propriétés mécaniques de l'aube 3 dans le domaine où une écaille pourrait se former. La géométrie des zones 18-21 peut donc être choisie en fonction de tests ou de simulations qui permettent d'identifier la zone la plus susceptible de former une écaille pour une texture fibreuse considérée.

Lorsque le renfort fibreux 4 comprend des deuxièmes et troisièmes portions 16, 17 à la fois dans les zones 20 et 21, le renfort fibreux 4 comprend alors des troisièmes torons 14 dans le sens chaîne et dans le sens trame dans les parties de ces zones 20, 21 qui se chevauchent.

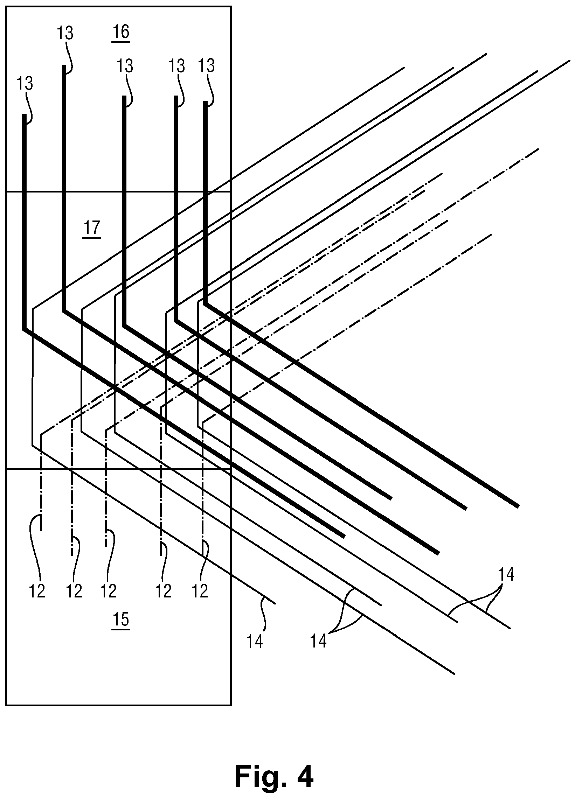

La modification de densité volumique des premiers, deuxièmes et troisièmes torons 12, 13, 14 peut être réalisée en faisant sortir / entrer successivement les torons du tissage de la préforme, au niveau des différents plans de chaîne (dans les zones 18-20) ou de trame (dans la zone 21) constituant la troisième portion 17, comme cela est illustré schématiquement sur la figure 4. Typiquement, à l'interface entre la première et la troisième portion 17, les premiers torons 12 sont sortis progressivement en les coupant au niveau de la surface de la préforme avant injection et en introduisant simultanément les troisièmes torons 14 entre ces plans de chaîne (respectivement, de trame). De même, à l'interface entre la troisième et la deuxième portion 16, les troisièmes torons 14 sont sortis progressivement et les deuxièmes torons 13 sont introduits simultanément entre ces plans de chaîne (respectivement, de trame). De la sorte, la première portion 15, la deuxième portion 16 et la portion intermédiaire 16 sont formées d'une seule pièce lors du tissage.

On pourra par exemple se référer au document FR 3 087 701 au nom du Demandeur pour un exemple de réalisation d'hybridation de torons de chaîne. Le même mode opératoire peut être mis en œuvre pour des torons de trame (zone 21).

De manière générale, les configurations décrites sont valables pour des moteurs dont la soufflante peut avoir un diamètre extérieur de l'ordre de 1,8 mètre à 3 mètres. Le nombre d'aubes 3 de la soufflante peut être égal par à 16 ou 18. Quel que soit le diamètre de la soufflante, le nombre d'aubes 3 de soufflante sera réduit autant que possible. Parmi différents critères, un choix de paramètres (notamment les zones 18, 19, 20 et/ou 21 comprenant les deuxième(s) et troisième(s) portion(s)) dépendra plus particulièrement du comportement de l'aube 3 de soufflante et de la combinaison « fréquentielle/dimensionnement en ingestion ». En effet, pour une même cible moteur, il est possible de choisir des différentes stratégies de comportements fréquentiels ou réponses fréquentielles en différents cas d'ingestions, par exemple pour repousser les réponses d'aube 3 et d'aubage en évitant des croisements vibratoires avec des harmoniques énergétiques du moteur. Par exemple, il est possible de faire des choix de manière à positionner ces croisements au niveau de régimes moteur transitoires.

L'hybridation des torons du renfort fibreux 4 permet en outre d'ouvrir le champ de conception grâce à l'apport supplémentaire en tenue mécanique. Par exemple, il devient possible d'affiner le profil de l'aube 3 au niveau du bord d'attaque 8 de la préforme 4 ou du bord de fuite 9 de la préforme 4 ou sur toute la hauteur H de la pale 7 en comparaison avec une aube 3 ne comprenant que des premiers torons 12 (à haut module d'élasticité), ce qui permet d'optimiser la masse de l'aube 3 et les performances aérodynamiques de la soufflante 1 (en obtenant des profils plus fins ou en réduisant le rapport de moyeu, qui est lié à la baisse de l'effort centrifuge induit par la masse de l'aube 3).

## Revendications

1. Aube (3) de soufflante d'une turbomachine comprenant une structure en matériau composite comprenant un renfort fibreux (4) obtenu par tissage tridimensionnel de torons et une matrice dans laquelle est noyé le renfort fibreux (4), le renfort fibreux (4) comprenant une première portion (15) et une deuxième portion (16) distinctes l'une de l'autre, les torons du renfort fibreux (4) comprenant des premiers torons (12) réalisés dans un premier matériau présentant une première raideur et des deuxièmes torons (13) réalisés dans un deuxième matériau différent du premier matériau et présentant une deuxième raideur inférieure à la première raideur, la première portion (15) comprenant uniquement des premiers torons (12), la deuxième portion (16) comprenant uniquement des deuxièmes torons (13),
l'aube (3) étant **caractérisée en ce que** le renfort fibreux (4) comprend en outre une troisième portion (17) positionnée entre la première portion (15) et la deuxième portion (16), la troisième portion (17) comprenant à la fois des premiers torons (12), des deuxièmes torons (13) et des troisièmes torons (14), les troisièmes torons (14) présentant une troisième raideur inférieure à la première raideur et supérieure à la deuxième raideur,
et **en ce que**, au sein de la troisième portion (17), une densité volumique des premiers torons (12) diminue progressivement de la première portion (15) en direction de la deuxième portion (16), une densité volumique des deuxièmes torons (13) diminue progressivement de la deuxième portion (16) en direction de la première portion (15).

2. Aube (3) de soufflante selon la revendication 1, dans laquelle la troisième portion (17) comprend une première partie en contact avec la première portion (15), une deuxième partie en contact avec la deuxième portion (16) et une partie centrale s'étendant entre la première partie et la deuxième partie, la première partie étant dépourvue de deuxièmes torons (13) et la deuxième partie étant dépourvue de premiers torons (12).

3. Aube (3) de soufflante selon la revendication 2, dans laquelle la partie centrale comprend uniquement des troisièmes torons (14).

4. Aube (3) de soufflante selon l'une des revendications 1 à 3 comprenant une première zone (18) dans laquelle :
- la deuxième portion (16) comprend une échasse (6) de l'aube (3) et une paroi extrados (E) jusqu'à une hauteur (H) comprise 0 % de 30 % d'une hauteur (H) de la pale et sur une portion de corde (C) s'étendant depuis une limite amont s'étendant à une distance d'un bord d'attaque (8) de l'aube (3) comprise entre 2 % et 10% de la longueur de corde (C), de préférence de l'ordre de 7 %, et une limite aval s'étendant à une distance d'un bord de fuite (9) de l'aube (3) comprise entre 10 % et 60% de la longueur de corde (C), de préférence de l'ordre de 55 % ; et
- la troisième portion (17) entoure la deuxième portion (16) en s'étendant de part et d'autre de la deuxième portion (16) sur une portion de longueur de corde (C) de l'ordre à 5 % de la longueur de corde (C).

5. Aube (3) de soufflante selon l'une des revendications 1 à 4 comprenant une deuxième zone (19) dans laquelle :
- la deuxième portion (16) comprend un bord d'attaque (8) et une paroi intrados (I) de l'aube (3) et s'étend sur une hauteur (H) comprise entre 40 % et 65 % d'une hauteur (H) de l'aube (3) et une portion de corde (C) comprise entre 20 % et 40 % de la longueur de corde (C), par exemple de l'ordre de 40 % ; et
- la troisième portion (17) s'étend du bord d'attaque (8) en direction de la paroi intrados (I) en entourant la deuxième portion (16) sur une portion de longueur égale à 50 % de la longueur de corde (C).

6. Aube (3) de soufflante selon l'une des revendications 4 ou 5, dans laquelle la deuxième portion (16) et la troisième portion (17) s'étendent chacune sur une épaisseur égale à un tiers d'une épaisseur du renfort fibreux (4).

7. Aube (3) de soufflante selon l'une des revendications 1 à 5 comprenant une troisième zone (20) dans laquelle :
- la deuxième portion (16) comprend un bord de fuite (9) de l'aube (3), sur tout ou partie d'une hauteur (H) de la pale et sur une longueur égale à au plus 10 % d'une longueur de corde (C) ;
- la troisième portion (17) jouxte la deuxième portion (16) et s'étend le long de la deuxième portion (16), sur une longueur égale à au plus 10 % de la longueur de corde (C) ; et
- la deuxième portion (16) et la troisième portion (17) s'étendent chacune sur toute une épaisseur du renfort fibreux (4).

8. Aube (3) de soufflante selon l'une des revendications 1 à 7, dans laquelle les premiers torons (12), les deuxièmes torons (13) et les troisièmes torons (14) comprennent des torons de chaine distribués de sorte à former des colonnes de chaîne.

9. Aube (3) de soufflante selon l'une des revendications 1 à 5 ou 7 comprenant une quatrième zone (21) dans laquelle :
- la deuxième portion (16) comprend un sommet (11) de l'aube (3) et un bord de fuite (9), sur une hauteur (H) égale à au plus 10 % de la hauteur (H) de l'aube (3) et une longueur comprise entre 40 % et 100 % de la longueur de corde (C) ;
- la troisième portion (17) s'étend depuis le sommet (11) de l'aube (3) sur toute la longueur de la deuxième portion (16) et sur une hauteur (H) égale à au plus 5 % de la hauteur (H) de l'aube (3) ; et
- la deuxième portion (16) et la troisième portion (17) s'étendent chacune sur toute une épaisseur du renfort fibreux (4).

10. Aube (3) de soufflante selon la revendication 9, dans laquelle dans laquelle les premiers, deuxièmes et troisièmes torons (14) comprennent des torons de trame distribués de sorte à former des lignes de trame.

11. Aube (3) selon l'une des revendications 1 à 10, dans laquelle le renfort fibreux (4) comprend uniquement une première portion (15), une ou plusieurs deuxième(s) portion(s) et une ou plusieurs troisième(s) portion(s).

12. Aube (3) selon l'une des revendications 1 à 11, dans laquelle les premiers torons (12) présentent un module d'élasticité compris entre 240 GPa et 350 GPa, de préférence supérieur ou égal à 250 GPa, les premiers torons (12) pouvant comprendre des fibres de carbone.

13. Aube (3) selon l'une des revendications 1 à 12, dans laquelle les deuxièmes torons (13) présentent un module d'élasticité compris entre 150 GPa et 190 GPa, les deuxièmes torons (13) pouvant comprendre des fibres de verre ou des fibres de basalte, et/ou dans laquelle les troisièmes torons (14) présentent un module d'élasticité compris entre 180 GPa et 250 GPa, les troisièmes torons (14) pouvant comprendre des fibres d'aramide.

14. Soufflante pour une turbomachine comprenant une pluralité d'aubes (3) conformes à l'une des revendications 1 à 13.

15. Renfort fibreux pour une aube de soufflante selon l'une des revendications 1 à 13.

## Patentansprüche

1. Gebläseschaufel (3) einer Turbomaschine, umfassend eine Struktur aus Verbundmaterial, die eine Faserverstärkung (4), die durch dreidimensionales Weben von Strängen erhalten wird, und eine Matrix umfasst, in die die Faserverstärkung (4) eingebettet ist, wobei die Faserverstärkung (4) einen ersten Abschnitt (15) und einen zweiten Abschnitt (16) umfasst, die voneinander verschieden sind, die Stränge der Faserverstärkung (4) erste Stränge (12) aus einem ersten Material mit einer ersten Steifigkeit und zweite Stränge (13) aus einem zweiten Material, das sich vom ersten Material unterscheidet und eine zweite Steifigkeit aufweist, die niedriger als die erste Steifigkeit ist, umfassen, wobei der erste Abschnitt (15) nur erste Stränge (12) umfasst, der zweite Abschnitt (16) nur zweite Stränge (13) umfasst,
wobei die Schaufel (3) **dadurch gekennzeichnet ist, dass** die Faserverstärkung (4) ferner einen dritten Abschnitt (17) umfasst, der zwischen dem ersten Abschnitt (15) und dem zweiten Abschnitt (16) positioniert ist, wobei der dritte Abschnitt (17) sowohl erste Stränge (12), zweite Stränge (13) als auch dritte Stränge (14) umfasst, wobei die dritten Stränge (14) eine dritte Steifigkeit aufweisen, die niedriger als die erste Steifigkeit und höher als die zweite Steifigkeit ist,
und dass innerhalb des dritten Abschnitts (17) eine Volumendichte der ersten Stränge (12) allmählich vom ersten Abschnitt (15) in Richtung des zweiten Abschnitts (16) abnimmt, eine Volumendichte der zweiten Stränge (13) allmählich vom zweiten Abschnitt (16) in Richtung des ersten Abschnitts (15) abnimmt.

2. Gebläseschaufel (3) nach Anspruch 1, wobei der dritte Abschnitt (17) einen ersten Teil in Kontakt mit dem ersten Abschnitt (15), einen zweiten Teil in Kontakt mit dem zweiten Abschnitt (16) und einen mittleren Teil, der sich zwischen dem ersten Teil und dem zweiten Teil erstreckt, umfasst, wobei der erste Teil keine zweiten Stränge (13) und der zweite Teil keine ersten Stränge (12) aufweist.

3. Gebläseschaufel (3) nach Anspruch 2, wobei der mittlere Teil nur dritte Stränge (14) umfasst.

4. Gebläseschaufel (3) nach einem der Ansprüche 1 bis 3, umfassend einen ersten Bereich (18), in dem:
- der zweite Abschnitt (16) eine Stelze (6) der Schaufel (3) und eine Oberseitenwand (E) bis zu einer Höhe (H) umfasst, die 0 % von 30 % einer Höhe (H) des Blattes liegt, und über einem Sehnenabschnitt (C), der sich von einer stromaufwärtigen Grenze erstreckt, die sich in einem Abstand von einer Vorderkante (8) der Schaufel (3) erstreckt, die zwischen 2 % und 10 % der Sehnenlänge (C), vorzugsweise in der Größenordnung von 7 %, liegt, und einer stromabwärtigen Grenze, die sich in einem Abstand von einer Hinterkante (9) der Schaufel (3) erstreckt, die zwischen 10 % und 60 % der Sehnenlänge (C), vorzugsweise in der Größenordnung von 55 %, liegt; und
- der dritte Abschnitt (17) den zweiten Abschnitt (16) umgibt, indem er sich auf beiden Seiten des zweiten Abschnitts (16) über einen Abschnitt der Sehnenlänge (C) in der Größenordnung bis 5 % der Sehnenlänge (C) erstreckt.

5. Gebläseschaufel (3) nach einem der Ansprüche 1 bis 4, umfassend einen zweiten Bereich (19), in dem:
- der zweite Abschnitt (16) eine Vorderkante (8) und eine Unterseitenwand (I) der Schaufel (3) umfasst und sich über eine Höhe (H) erstreckt, die zwischen 40 % und 65 % einer Höhe (H) der Schaufel (3) liegt, und einen Sehnenabschnitt (C), der zwischen 20 % und 40 % der Sehnenlänge (C), beispielsweise in der Größenordnung von 40 %, liegt; und
- sich der dritte Abschnitt (17) von der Vorderkante (8) in Richtung der Unterseitenwand (I) erstreckt, indem er den zweiten Abschnitt (16) über einen Längenabschnitt von gleich 50 % der Sehnenlänge (C) umgibt.

6. Gebläseschaufel (3) nach einem der Ansprüche 4 oder 5, wobei sich der zweite Abschnitt (16) und der dritte Abschnitt (17) jeweils über eine Dicke erstrecken, die gleich einem Drittel einer Dicke der Faserverstärkung (4) ist.

7. Gebläseschaufel (3) nach einem der Ansprüche 1 bis 5, umfassend einen dritten Bereich (20), in dem:
- der zweite Abschnitt (16) eine Hinterkante (9) der Schaufel (3) über die gesamte oder einen Teil einer Höhe (H) des Blattes und über eine Länge, die höchstens gleich 10 % einer Sehnenlänge (C) ist, umfasst;
- der dritte Abschnitt (17) an den zweiten Abschnitt (16) angrenzt und sich entlang des zweiten Abschnitts (16) über eine Länge erstreckt, die höchstens gleich 10 % der Sehnenlänge (C) ist; und
- der zweite Abschnitt (16) und der dritte Abschnitt (17) sich jeweils über eine gesamte Dicke der Faserverstärkung (4) erstrecken.

8. Gebläseschaufel (3) nach einem der Ansprüche 1 bis 7, wobei die ersten Stränge (12), die zweiten Stränge (13) und die dritten Stränge (14) Kettstränge umfassen, die derart verteilt sind, dass sie Kettensäulen bilden.

9. Gebläseschaufel (3) nach einem der Ansprüche 1 bis 5 oder 7, umfassend einen vierten Bereich (21), in dem:
- der zweite Abschnitt (16) eine Spitze (11) der Schaufel (3) und eine Hinterkante (9) über eine Höhe (H) umfasst, die höchstens gleich 10 % der Höhe (H) der Schaufel (3) ist, und eine Länge, die zwischen 40 % und 100 % der Sehnenlänge (C) liegt;
- sich der dritte Abschnitt (17) von der Spitze (11) der Schaufel (3) über die gesamte Länge des zweiten Abschnitts (16) und über eine Höhe (H) erstreckt, die gleich höchstens 5 % der Höhe (H) der Schaufel (3) ist; und
- sich der zweite Abschnitt (16) und der dritte Abschnitt (17) jeweils über eine gesamte Dicke der Faserverstärkung (4) erstrecken.

10. Gebläseschaufel (3) nach Anspruch 9, wobei die ersten, zweiten und dritten Stränge (14) Schussfadenstränge umfassen, die derart verteilt sind, dass sie Schussreihen bilden.

11. Schaufel (3) nach einem der Ansprüche 1 bis 10, wobei die Faserverstärkung (4) nur einen ersten Abschnitt (15), einen oder mehrere zweite Abschnitte und einen oder mehrere dritte Abschnitte umfasst.

12. Schaufel (3) nach einem der Ansprüche 1 bis 11, wobei die ersten Stränge (12) ein Elastizitätsmodul aufweisen, das zwischen 240 GPa und 350 GPa liegt, vorzugsweise über oder gleich 250 GPa, wobei die ersten Stränge (12) Kohlenstofffasern umfassen können.

13. Schaufel (3) nach einem der Ansprüche 1 bis 12, wobei die zweiten Stränge (13) ein Elastizitätsmodul aufweisen, das zwischen 150 GPa und 190 GPa liegt, wobei die zweiten Stränge (13) Glasfasern oder Basaltfasern umfassen können, und/oder wobei die dritten Stränge (14) ein Elastizitätsmodul aufweisen, das zwischen 180 GPa und 250 GPa liegt, wobei die dritten Stränge (14) Aramidfasern umfassen können.

14. Gebläse für eine Turbomaschine, umfassend eine Vielzahl von Schaufeln (3) nach einem der Ansprüche 1 bis 13.

15. Faserverstärkung für eine Gebläseschaufel nach einem der Ansprüche 1 bis 13.

## Claims

1. A fan blade (3) for a turbomachine comprising a structure made of composite material comprising a fibrous reinforcement (4) obtained by three-dimensional weaving of strands and a matrix in which the fibrous reinforcement (4) is embedded, the fibrous reinforcement (4) comprising a first portion (15) and a second portion (16) which are distinct from one another, the strands of the fibrous reinforcement (4) comprising first strands (12) made of a first material having a first stiffness and the second strands (13) made of a second material different from the first material and having a second stiffness less than the first stiffness, the first portion (15) comprising only first strands (12), the second portion (16) comprising only second strands (13),
the vane (3) being **characterised in that** the fibrous reinforcement (4) further comprises a third portion (17) positioned between the first portion (15) and the second portion (16), the third portion (17) comprising both first strands (12), second strands (13) and third strands (14), the third strands (14) having a third stiffness less than the first stiffness and greater than the second stiffness,
and **in that**, within the third portion (17), a volume density of the first strands (12) decreases progressively from the first portion (15) towards the second portion (16), a volume density of the second strands (13) decreases progressively from the second portion (16) towards the first portion (15).

2. A fan blade (3) according to claim 1, wherein the third portion (17) comprises a first part in contact with the first portion (15), a second part in contact with the second portion (16) and a central part extending between the first part and the second part, the first part being devoid of second strands (13) and the second part being devoid of first strands (12).

3. Fan blade (3) according to claim 2, in which the central part comprises only third strands (14).

4. A fan blade (3) according to one of claims 1 to 3 comprising a first zone (18) in which :
- the second portion (16) comprises a stilt (6) of the blade (3) and an extrados wall (E) up to a height (H) of between 0% and 30% of a height (H) of the blade and over a chord portion (C) extending from an upstream limit extending at a distance from a leading edge (8) of the blade (3) of between 2% and 10% of the chord length (C), preferably of the order of 7%, and a downstream limit extending at a distance from a trailing edge (9) of the blade (3) of between 10% and 60% of the chord length (C), preferably of the order of 55% ; and
- the third portion (17) surrounds the second portion (16), extending on either side of the second portion (16) over a portion of chord length (C) of the order of 5% of the chord length (C).

5. A fan blade (3) according to one of claims 1 to 4 comprising a second zone (19) in which:
- the second portion (16) comprises a leading edge (8) and an intrados wall (I) of the blade (3) and extends over a height (H) of between 40% and 65% of a height (H) of the blade (3) and a chord portion (C) of between 20% and 40% of the chord length (C), for example of the order of 40%; and
- the third portion (17) extends from the leading edge (8) towards the intrados wall (I), surrounding the second portion (16) over a portion of length equal to 50% of the chord length (C).

6. A fan blade (3) according to one of claims 4 or 5, wherein the second portion (16) and the third portion (17) each extend over a thickness equal to one third of a thickness of the fibrous reinforcement (4).

7. A fan blade (3) according to one of claims 1 to 5 comprising a third zone (20) in which:
- the second portion (16) comprises a trailing edge (9) of the blade (3), over all or part of a height (H) of the blade and over a length equal to at most 10% of a chord length (C);
- the third portion (17) adjoins the second portion (16) and extends along the second portion (16), over a length equal to at most 10% of the chord length (C); and
- the second portion (16) and the third portion (17) each extend over an entire thickness of the fibrous reinforcement (4).

8. A fan blade (3) according to one of claims 1 to 7, wherein the first strands (12), the second strands (13) and the third strands (14) comprise warp strands distributed so as to form warp columns.

9. A fan blade (3) according to one of claims 1 to 5 or 7 comprising a fourth zone (21) in which :
- the second portion (16) comprises a tip (11) of the blade (3) and a trailing edge (9), over a height (H) equal to at most 10% of the height (H) of the blade (3) and a length of between 40% and 100% of the chord length (C);
- the third portion (17) extends from the tip (11) of the blade (3) over the entire length of the second portion (16) and over a height (H) equal to at most 5% of the height (H) of the vane (3); and
- the second portion (16) and the third portion (17) each extend over an entire thickness of the fibrous reinforcement (4).

10. A fan blade (3) according to claim 9, wherein the first, second and third strands (14) comprise weft strands distributed so as to form weft lines.

11. A blade (3) according to one of claims 1 to 10, wherein the fibrous reinforcement (4) comprises only a first portion (15), one or more second portions and one or more third portions.

12. Blade (3) according to one of claims 1 to 11, wherein the first strands (12) have a modulus of elasticity of between 240 GPa and 350 GPa, preferably greater than or equal to 250 GPa, it being possible for the first strands (12) to comprise carbon fibres.

13. Blade (3) according to one of claims 1 to 12, in which the second strands (13) have a modulus of elasticity of between 150 GPa and 190 GPa, it being possible for the second strands (13) to comprise glass fibres or basalt fibres, and/or wherein the third strands (14) have a modulus of elasticity of between 180 GPa and 250 GPa, it being possible for the third strands (14) to comprise aramid fibres.

14. A fan for a turbomachine comprising a plurality of blades (3) in accordance with one of claims 1 to 13.

15. A fibrous reinforcement for a fan blade according to one of claims 1 to 13.
